# EUROPEAN PATENT SPECIFICATION

(11) **EP 3 209 124 B1**
(45) Date of publication and mention of the grant of the patent: **01.12.2021**
(21) Application number: 15790181.0
(22) Date of filing: 20.10.2015
(51) Int. Cl.: A01K 61/60

(54) **SUBMERSIBLE CAGE FOR AQUACULTURE AND METHOD OF ADJUSTING THE DEPTH OF SAID CAGE**
TAUCHFÄHIGER KÄFIG FÜR AQUAKULTUR UND VERFAHREN ZUR TIEFENEINSTELLUNG DIESER KÄFIG
CAGE SUBMERSIBLE POUR AQUACULTURE ET PROCÉDÉ D'AJUSTEMENT DE LA PROFONDEUR DE CETTE CAGE

(30) Priority: 20.10.2014 GB 201418625
(43) Date of publication of application: 30.08.2017
(73) Proprietor: Searas AS, 5003 Bergen (NO)
(72) Inventor: AGA, Morten, 5725 Vaksdal (NO)
(74) Representative: Dehns
(86) International application number: PCT/GB2015/053128
(87) International publication number: WO 2016/063040

(56) References cited:
- WO-A2-2009/085987
- CN-U- 203 505 317
- CN-Y- 2 531 634
- US-A- 4 744 331
- US-A1- 2006 130 728
- None

## Description

The invention relates to submersible cages for aquatic animals, particularly to submersible cages capable of being used in harsh environments such as offshore in adverse weather conditions.

Cages for aquatic animals may be located in freshwater or in seawater depending on the animals being held in the cage. For example salmon are typically held in freshwater cages during the early part of their lifecycle and then moved to seawater cages for the later part of their lifecycle.

Marine (i.e. seawater) aquaculture cages are typically located in fjords or bays where conditions are relatively quiet and sheltered. It is desirable to be able to move such cages offshore where there is more space and where cages can potentially be made larger. However locating cages offshore is problematic as the cages have to be able to withstand the harsher conditions that may exist out at sea.

The challenge of adverse weather when moving farms offshore is a significant one. For example, offshore sites around Norway can experience up to 30 m high waves in some areas. The oil industry has developed oil rigs that can survive in such conditions, but these involve heavy structures that are very expensive. The oil rigs float on the surface and are designed to ride off storms with high wind and waves over 30m. If the same approach were to be taken for offshore fish farming (or other marine aquaculture), it would be very expensive to design and produce the structures that could be placed in such an environment. The amount of farmed fish that would need to be produced to justify such an investment is prohibitive.

Most of the important engineering design criteria arise when the so-called "design storm" is combined with site-specific conditions. The "design storm" is a theoretical set of storm conditions which the structure should be designed to withstand. For example a certain combination of wave height, wave period and current speed at a given site will in most cases cause the maximum load on a structure, thus defining most of its design criteria. Normal conditions with respect to waves, currents, winds and debris in the ocean also give rise to engineering criteria.

One of the greatest contributing factors of a "design storm" is the maximum wave likely to occur at a given site. The maximum wave typically contributes to the creation of the greatest single force exerted on a structure. Other contributions include tidal currents and winds.

If a submerged structure is designed to survive the maximum wave's effects it should survive the effects of other smaller waves. However, the biggest waves are not necessarily the cause of failure for floating structures. The biggest waves are the highest risk for causing static failure, but the most common conditions over time may also cause fatigue failure. All of this will be taken into account in the engineering analysis for designing a structure.

The design wave's return period is normally estimated from a wind and/or wave dataset. A structure's lifetime may be calculated with respect to that. Normally this return period has a magnitude of the order of 20, 50 or 100 years. In some examples, using significant wave heights and taking into account that the highest wave in a given wave spectrum can, statistically, be up to 67% higher than the significant wave, certain wave data imply maximum waves of over 30 m. Waves of this magnitude with corresponding periods and some current velocities have been used as extreme scenarios for modern design criteria for some offshore fish cages. However to take account of these occasional high magnitude wave conditions, the offshore farm cage structures designed according to this process are expensive and it is difficult to make them commercially viable compared with their non-offshore equivalents.

CN2531634Y describes a submersible cage with a variable buoyancy with mooring ropes that anchor the cage to the seabed and also to surface floats. WO2009/085987 describes a submersible cage with variable buoyancy in which the cage is connected to a mooring chain to a seabed anchor via polyester bridle ropes. US2006/0130728 describes a submersible cage with variable buoyancy in which the cages are connected via a rope to a submerged rope tension moderating buoy. CN203505317U describes a submersible cage which is moored to seabed anchors via mooring ropes.

According to the invention there is provided a submersible cage according to claim 1.

By varying the buoyancy of the variable buoyancy float, the cage can be raised to a floating position (which provides the best access for maintenance such as cleaning, removal of dead fish, etc.) and submerged to a desired depth. The depth at which the cage is submerged depends on the buoyancy of the variable buoyancy float and therefore can be adjusted freely to suit the conditions.

By adjusting the buoyancy of the variable buoyancy float to submerge the cage in harsh weather conditions, the cage can be protected from the worst of the conditions. For example, the cage can be submerged to a depth such that it remains well below the troughs of the waves, even in extremely high wave conditions. When the cage is fully submerged it also does not experience high winds and the strengths of storm currents may be weaker at deeper depths. This significantly reduces the stresses that will be experienced by the cage during a storm and thus significantly reduces the engineering requirements and the associated costs.

Equally, in good weather conditions, the variable buoyancy float can raise the cage up to the surface where the farmer can access the cage for cleaning, inspection, feeding and maintenance as required.

The variable buoyancy float can also be adjusted to any intermediate depth as desired for example to optimize the conditions for the aquatic animals held within the cage. Different conditions (light level, oxygen level, temperature, salinity, currents, sea lice presence, etc.) may alter the depth that provides the optimal habitat for the animals. For example, deeper levels may be better for avoiding infection when the concentration of sea lice is high (typically nearer the surface). At the same time, different depths have different light and temperature levels which may be sub-optimal for the animals. In such cases, the depth of the cage can be carefully controlled by adjusting the buoyancy of the variable buoyancy float. Optimal conditions for the animals results in higher growth rates, reduced mortality rates and therefore increased production.

The connecting element is made from a material of a different density to the ambient water. The connecting element is more dense than the ambient water so that it sinks and provides a downwards force on the variable buoyancy float and on the mount structure. The downward force helps to stabilize the feeding apparatus in the water. The use of a flexible connecting element means that as the end points are moved to different relative vertical positions, the weight distribution between the different support structures (the variable buoyancy float and the mount structure) is changed so that the different supports have to support different weights. This has the effect of reducing the sensitivity of the system to the buoyancy of the float and thus facilitating control over the float depth (and thus the feed supply depth). For example, when the buoyancy of the variable buoyancy float is increased, the float will start to rise. As it rises, the fraction of the weight of the connecting element that is supported by the float rather than by the mount structure increases until it balances the increased buoyancy force. The size (and thus weight per unit length) of the connecting element can be selected so as to provide the required level of control. This must be balanced against the available buoyancy force and the depth range required for the float.

The floating mount structure floats on the surface of the body of water and thus moves up and down with the tides and with waves. Although the oscillatory vertical movement of the floating mount structure caused by waves causes movement and a change in the relative weight distribution of the connecting element between the floating mount structure and the submerged cage, the frequency of oscillation is sufficiently high in relation to the movement rate of the submerged cage that it does not cause any substantial movement of the submerged cage which thus remains at a relatively stable depth even during periods of high waves.

The flexible connecting element comprises at least one rope, cable, chain or similar. The material of the connecting element is a dense and/or heavy material compared to the ambient water, such as a metal. The connecting element may comprise different sections of different construction, for example a length of heavier chain to provide weight, connected to the mount structure via a length of lighter weight rope. A single connecting element may suffice in some circumstances. However preferably two or more connecting elements attached to different positions on the variable buoyancy float are used to provide balance and stability. These plurality of connecting elements may be attached at the other ends to a common attachment point on the mount structure or to different points or to a plurality of mount structures.

The flexible element is arranged such that at certain depths of submersion, the flexible connecting element hangs in an arc between the cage and the mount structure. The flexible element should be long enough that it permits the cage to be deployed (by lowering the buoyancy of the variable buoyancy float) to its maximum desired depth without being restricted by the connecting element.

The buoyancy of the variable buoyancy float may be varied in different ways. For example it can be varied by adjusting the mass while keeping the volume constant or it can be adjusted by adjusting the volume while keeping the mass constant, or a combination of both. In preferred arrangements, a fluid with a different density to that of the ambient water is used to adjust the buoyancy. The fluid may be of a greater or lesser density or fluid of one density could be replaced with fluid of a different density so as to alter the buoyancy of the float. The variable buoyancy float may comprise a fluid chamber or reservoir to contain the fluid of different density to the ambient water. The chamber may be an expandable chamber, e.g. a chamber that can be inflated and deflated by adding and removing fluid. Alternatively, the chamber may be a fixed volume and the amount of a fluid within the chamber can be adjusted by adding or removing that fluid to change the mass within the chamber. In preferred embodiments, the fluid supplied to the chamber is gas, more preferably air. The quantity of air held within the variable buoyancy float (e.g. within the chamber) determines its buoyancy either by water replacement (forcing water out or drawing water into the chamber) so as to alter the mass or by inflating and deflating the chamber to change its volume. In an adjustable volume chamber, the volume of the chamber may be adjusted by compressing and decompressing gas, e.g. using a compressor or a pneumatic cylinder without requiring any external supply. However such systems are expensive and require maintenance. Therefore the system may further comprise a fluid supply line arranged to supply fluid of different density to the ambient water so as to vary the buoyancy of the variable buoyancy float. Such systems are inexpensive and easy to maintain. Similarly, the variable buoyancy float may further comprise a fluid outlet through which fluid may be expelled so as to change the buoyancy. This may be to reduce the volume of an expandable chamber. Alternatively, air can be vented into the surrounding water without harm. In some preferred arrangements, a fluid less dense than water (preferably air) is supplied to and drawn from the chamber through an upper opening. Supply of the less dense fluid through the upper opening forces water out of a lower opening thus decreasing the mass within the chamber. Drawing the less dense fluid from the upper opening draws water in through the lower opening thus increasing the mass within the chamber. This arrangement provides a simple and inexpensive system which is easy to maintain. Only a single connection is required to the chamber and all pumping apparatus can be located above the water level, e.g. on land or on a nearby vessel.

The submersible cage may comprise a plurality of variable buoyancy floats, e.g. arranged at different points around the cage so as to provide better balance. These may all be fed from the same fluid supply (preferably an air supply).

The submersible cage may further comprise a fixed buoyancy float in addition to the variable buoyancy float. The fixed buoyancy float may be designed to support the majority of the weight of the underwater part of the system so that the variable buoyancy float only needs to overcome a small portion of the total weight in order to adjust the height.

In some preferred embodiments said variable buoyancy float (or a plurality of variable buoyancy floats) may be attached to an upper part of said cage. The variable buoyancy floats thus provide a support point from which nets or other cage boundaries may be hung. Alternatively, in other preferred embodiments, the variable buoyancy float may be attached to a lower part of the cage. The cage may then be standing on top of the floating element(s). When the cage is raised, all or part of the cage may be raised above the water level. This can be a benefit to get rid of fouling on the net. If the fouling is left to dry on the net, it then tends to falls off the net.

The submersible cage may further comprise an air retaining structure, the air retaining structure having a structure that is open at the bottom so that air can be retained within the air retaining structure while underwater to create an underwater air/water interface. The provision of an air water interface underwater that can be depth adjusted (by adjusting the buoyancy of the float) is advantageous because it provides a local source of air for aquatic animals, e.g. for fish to gulp air so as to fill the swim bladder. Normally, animals would have to return to the surface to do this, but as described above, the surface may not be optimal in other respects, particularly due to storm conditions or the presence of sea lice larvae. Thus the provision of an air/water interface underwater and at variable depth can improve the environment by reducing the necessity to return to non-optimal conditions.

Preferably air is supplied to the air retaining structure via an air supply line that also supplies the variable buoyancy float. A single supply can then be used for both purposes and can be controlled simply by different valves.

In other embodiments the air retaining structure also provides the variable buoyancy of the float, thus reducing the number of components that are required.

The submersible cage may further comprise a weight attached to a lower part of the cage. The weight acts to pull the bottom of the cage down. A funnel may be provided at the bottom of the cage as part of a collection system for dead fish.

According to another aspect, the invention provides a method of adjusting the depth of a submersible cage for offshore aquaculture according to claim 12.

All of the preferred features described above in relation to the apparatus apply equally and appropriately to this method.

Certain preferred embodiments of the invention will now be described, by way of example only, and with reference to the accompanying drawings in which:
Fig. 1 shows a submersible cage system while submerged in normal conditions;
Fig. 2 shows the submersible cage of Fig. 1 while submerged during high wave conditions;
Fig. 3 shows the submersible cage of Fig. 1 while floating on the surface during good conditions;
Fig. 4 shows a top view of a submersible cage;
Fig. 5 shows further details of an aquaculture farming system;
Fig. 6 shows yet another embodiment of a submersible cage.

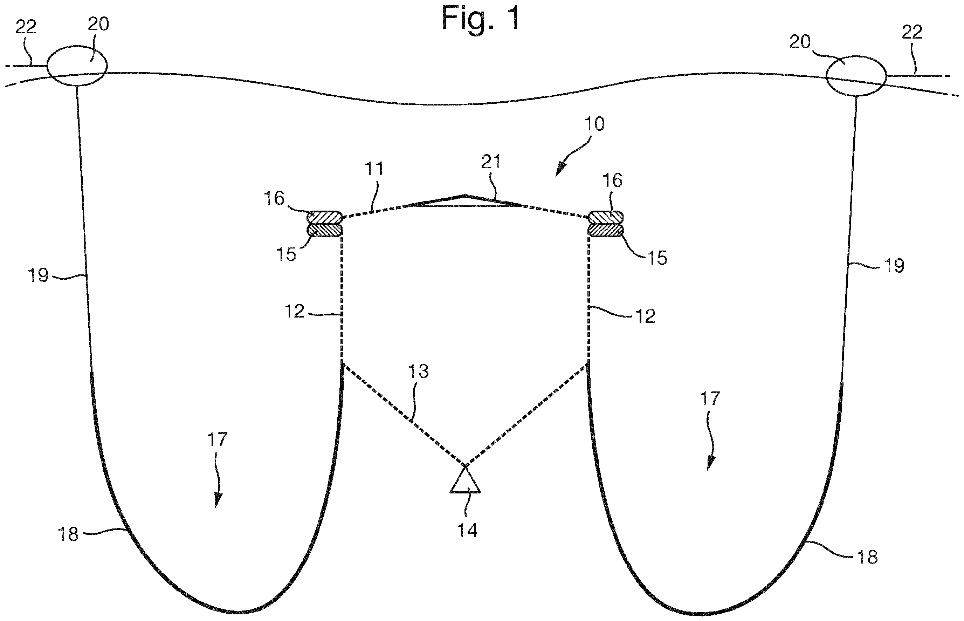

Figs. 1 to 5 show an offshore fish cage 10 that includes a roof 11, walls 12 and a floor 13 that together form a caged volume in which fish may be held for farming. A weight 14 holds down the floor 13. Variable buoyancy floats 15 and fixed buoyancy floats 16 are attached to an upper part of the cage 10 and support the roof 11 and walls 12. Connecting elements 17 (two shown in Fig. 1) each comprise a heavy (denser than water) chain or cable 18 one end of which is attached to the cage and a lighter rope 19 that attaches the other end of cable 18 to an anchored floating mount structure 20. An air retaining structure 21 is formed at the top of the cage 10 in the roof 11. Air retaining structure 21 can trap and retain air (or may have air supplied to it by a supply line, not shown) so as to provide an underwater air/water interface where the fish can gulp air even when the cage 10 is submerged.

Figure 1 shows the cage 10 submerged during normal conditions with low waves. The low wave height means that the anchored floating mount structures 20 do not rise and drop very much relative to the cage 10. The frequency of the waves is high in comparison to the oscillation of the cage 10 so that the cage 10 remains relatively unaffected by the wave motion.

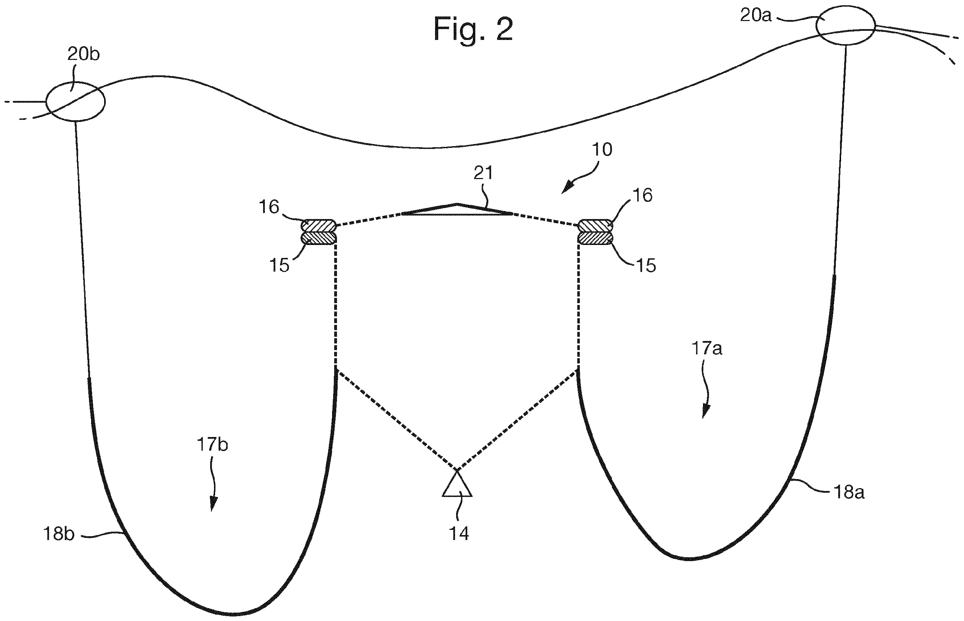

Figure 2 shows the cage 10 submerged during high wave conditions. The high wave conditions are such that the cage 10 would experience high forces if it were floating on the surface. High forces would be experienced from the waves, winds and surface currents in a storm, but the submerged cage is relatively unaffected by the wind, waves and surface currents as these forces do not transfer to deeper depths. As shown in Figure 2, the distribution of weight of the respective flexible element 17a (including cable 18a) is more towards the higher mount structure 20a than the cage 10 (and its submerged variable buoyancy floats 15). By contrast, the distribution of weight of the other flexible element 17b (including cable 18b) is more evenly balanced between the cage 10 (and its submerged variable buoyance floats 15) and the lower floating mount structure 20b.

Figures 1 and 2 illustrate why the design factors for structural capacity and for fatigue can be reduced significantly in comparison with structures that are floating because a floating structure has to be designed to cope with the full forces from waves, wind and currents during storm conditions, even though such storm conditions may be uncommon. The submersible cage 10 can be lowered (submerged) during storm conditions to a suitable depth to avoid risk of damage.

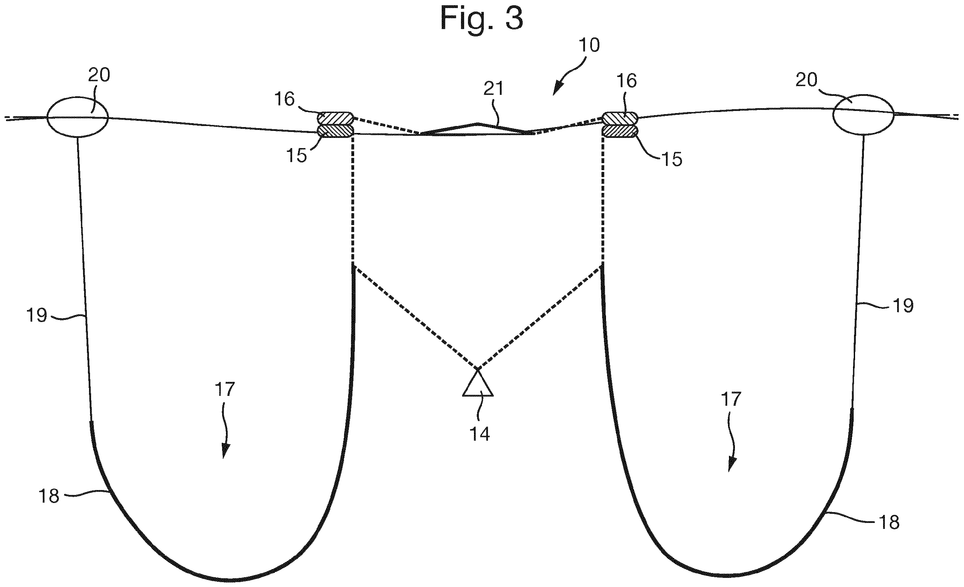

Figure 3 shows the cage 10 floating during good weather with practically no waves. In this position the cage 10 is accessible from the surface. The fixed and variable buoyancy floats 15, 16 are no the surface. The variable buoyancy floats 15 are maximally inflated (for maximum buoyancy). In this position the weight distribution of the flexible connecting elements 17 (including cables 18) is more on the cage 10 (and variable buoyancy floats 15) than on the floating mount structures 20, thus providing a greater weight that needs to be balanced by the floats 15, 16.

The air retaining structure 21 is also above the sea surface in the arrangement of Figure 3. In this position, the air retaining structure 21 can fill with air which will be trapped next time the cage 10 is submerged.

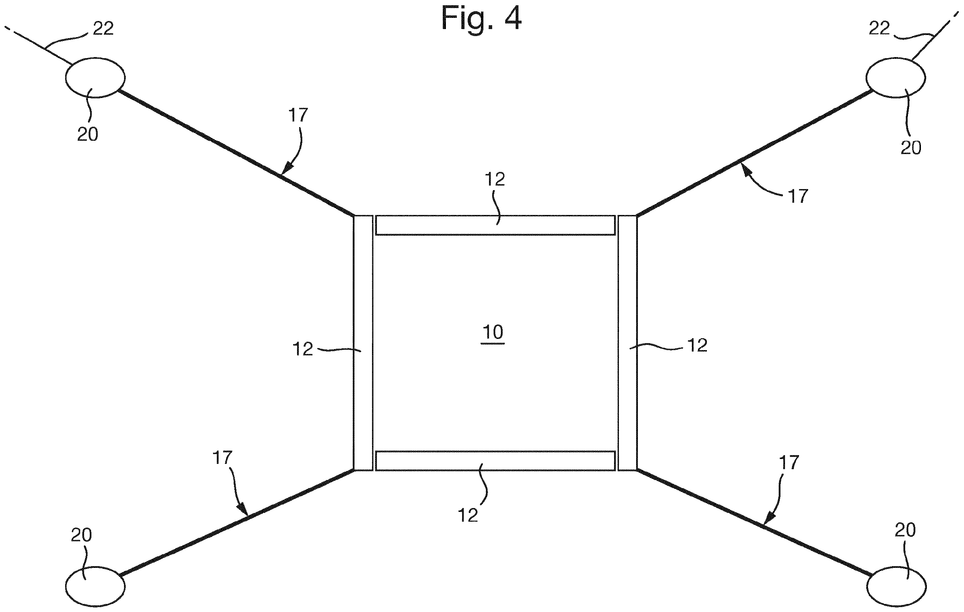

Figure 4 shows a top view of a square cage 10 with four anchored floating mount structures 20, each with its own anchor line 22.

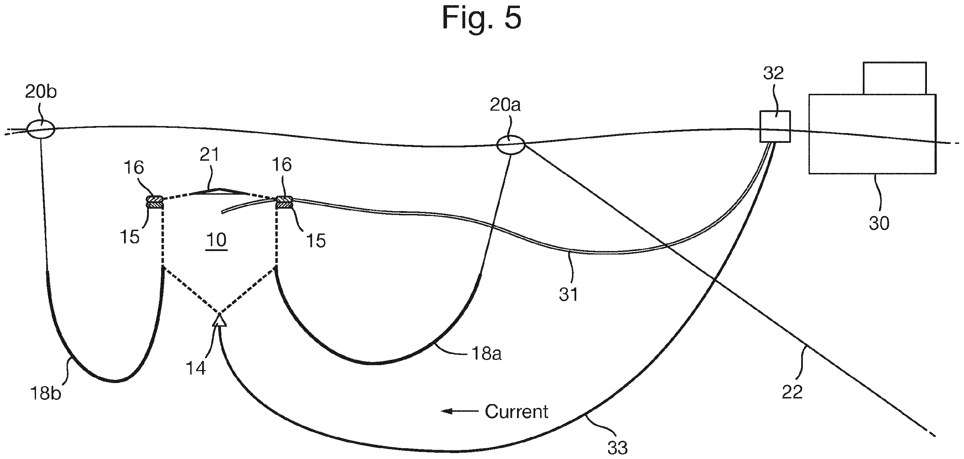

Figure 5 illustrates other elements of a typical fish farming (or other aquaculture) system. A feed barge 30 stores feed that can be periodically or continuously released into the cage 10 via feed line 31. Feed line 31 may be connected to an intermediate connection unit 32 that may remain in proximity to the cage 10 while the feed barge 30 is moved either for restocking or to avoid storm conditions. An air supply line (not shown) may also be connected between the cage 10 and the barge 30 via connection unit 32 for supplying air to (or drawing air from) the variable buoyancy floats 15 so as to adjust their buoyancy. The air supply line may also be used to supply air to the air retaining structure 21 while underwater.

A lift up system for collecting dead fish from the bottom of the cage 10 includes a funnel (not shown) in the bottom of the cage that is connected to a tank (not shown) on the feed barge 30. The system operates by inserting air into a hose 33 that is connected between the funnel and the tank such that water starts to run between the funnel and the tank, transporting dead fish from the bottom of the cage 10 and into the tank.

Fig. 5 illustrates a current from right to left in the figure which has moved the cage 10 and the anchored floating mount structures 20a, 20b to the far left, held in place by the anchor line 22 on mount structure 20a. The current has caused the right hand flexible element 18a to stretch out and the left hand flexible element 18b to compress, but both have their weights equally distributed between the cage 10 and the respective floating mount structures 20a, 20b so that the cage 10 remains stable and balanced.

The fish cage 10 can be of any type such as a mesh type that relies upon on currents transporting water through the cage 10. Alternatively it can be a closed type which relies on water being fed in an out, potentially through filters. This latter arrangement has a several advantages such as addressing challenges like sea lice and other diseases by filtering to prevent contamination within the cage 10.

The cage 10 can be designed so that it can be floating in most weather conditions to allow for working on the cage. For example, in some embodiments the design allows working during weather conditions that occur around 95% of the time. This will allow the cage system to be available for the fish farmer to perform work more than 95% of the time. The actual time the fish farmer needs to work on the cage in the floating position might be as little as 5%, but the availability of the cage in the floating position can be very high, e.g. as mentioned above, around 95%

In case of severe weather the fish farmer can disconnect the feed barge 30 from the connection unit 32. The connection unit 32 can be a floating device that contains connections points toward the cage 10. When the weather returns to normal, the feed barge 30 will return to the site and be reconnected to connection unit 32.

In an alternative embodiment, the submersible cage 10 described above can focus on keeping the cage 10 normally submerged. When the fish farmer needs to go onto the cage 10, it needs to be raised to the surface, but when the fish farmer is done with his work the cage 10 can be submerged again for normal operation.

The cage 10 should of course allow all normal activities on a typical fish farm such as feeding, collecting dead fish, camera monitoring, raising of the nets to remove growth, etc. when the cage is submerged.

As a typical example of the assessment of conditions, if we look at a typical wave height scatter for an area it may be found that less than 0.5% of the time the wave height is above e.g. 3m. Extremely seldom like every 10-100 years the site may experience waves up to 25-30 meters in height. It would be a major challenge to design a cage system to withstand that extreme wave height. However, it can be appreciated that the submersible cage described above can avoid those conditions and thus not need to be designed to such strict criteria, thus making it more cost effective to produce and to maintain.

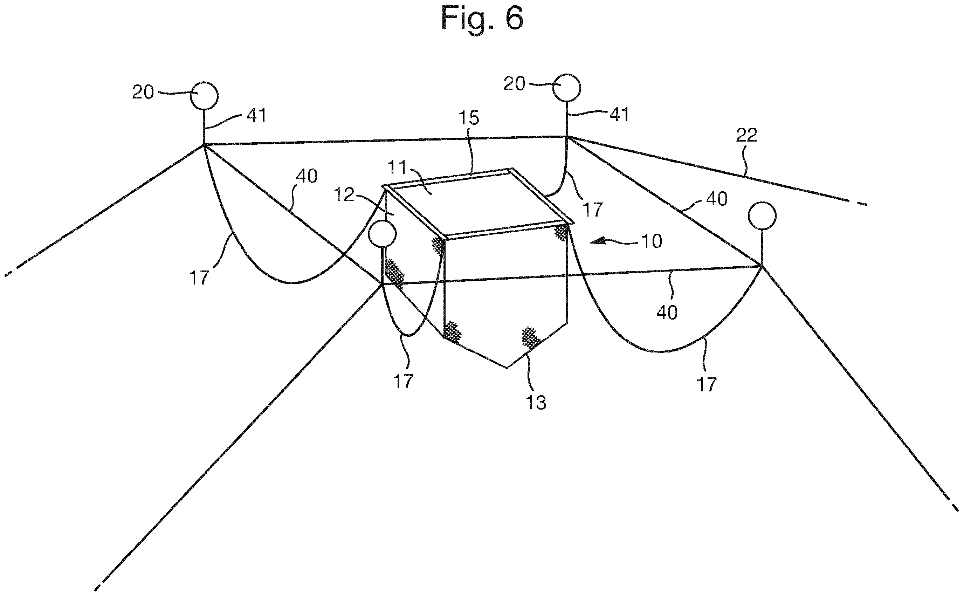

Figure 6 shows another embodiment similar to that of Figures 1 to 5, with a mount structure and flexible connecting elements 17 (including both a rope part and a chain part although these are not distinguished in the figure) connecting to the cage 10. A square floating mount structure is shown here formed from four mount structure lines 40 connected into a square formation and anchored via anchor lines 22. The square mount structure retains its approximately square form through tension in the anchor lines 22 which are anchored significantly further out in a square of significantly greater dimension and from buoyancies 20 which pull from above. In a typical installation the buoyancies 20 are connected to the mount structure lines 40 by connecting lines 41 of about 10 metres length. The buoyancies 20 float on the sea surface. There is enough slack in the anchor lines 22 that the movement of buoys 20 with large waves during a storm does not produce excessive stress on the mount structure lines 40 and connecting lines 41.

The cage 10 is connected to the mount structure lines 40 at the corners of the square via four flexible connecting elements 17. The cage 10 is thus supported within the mount structure and is held in a relatively stable and balanced central location by the four opposed connecting elements 17 that hang in arcs between the mount structure 40 and the variable buoyancy 15 of the cage 10. The weights of the connecting elements increase the stability by responding slower to surface movements. Thus the movement of the cage 10 is subdued and gentle relative to the surface motion. The variable buoyancy 15 in this embodiment is square in shape and forms the upper rim of the cage 10 to which the walls 12 and roof 11 are attached.

## Claims

1. A submersible cage for offshore aquaculture, comprising:
a cage (10) for containing aquatic animals;
a variable buoyancy float (15);
a flexible element (17) connected at one end to the cage (10) and with the other end arranged such that the weight distribution of the flexible element between the cage (10) and another support can be adjusted by varying the buoyancy of the variable buoyancy float (15); and
a floating mount structure (20) separate from the cage (10);
wherein the flexible element (17) is connected between the cage (10) and the mount structure (20); and wherein said flexible element (17) is arranged such that at certain depths of submersion, the flexible element (17) hangs in an arc between the cage (10) and the mount structure (20); **characterized in that**
the flexible element (17) comprises at least one rope, cable, chain or similar made from a material such as metal which is more dense and/or heavy compared to the ambient water, so as to provide a downward force on the variable buoyancy float (15) and on the mount structure, to help to stabilize the submersible cage when submerged in the water.

2. A submersible cage as claimed in claim 1, wherein said at least one rope, cable, chain or similar of the flexible element (17) is made from metal.

3. A submersible cage as claimed in claim 1 or 2, wherein said variable buoyancy float (15) is attached to a lower part of said cage (10).

4. A submersible cage as claimed in claim 1, 2 or 3, further comprising a fluid supply line (33) arranged to supply fluid of different density than the ambient water so as to vary the buoyancy of the variable buoyancy float (15).

5. A submersible cage as claimed in any preceding claim, wherein said variable buoyancy float (15) comprises a fluid outlet.

6. A submersible cage as claimed in any preceding claim, further comprising a fixed buoyancy float (16).

7. A submersible cage as claimed in any preceding claim, comprising a plurality of variable buoyancy floats (15).

8. A submersible cage as claimed in any preceding claim, further comprising an air retaining structure (21), the air retaining structure (21) having a structure that is open at the bottom so that air can be retained within the air retaining structure (21) while underwater to create an underwater air/water interface.

9. A submersible cage as claimed in claim 8, wherein an air supply line (33) is arrange to supply air to the air retaining structure (21) as well as to the variable buoyancy float (15).

10. A submersible cage as claimed in claim 8, wherein the air retaining structure (21) also provides the variable buoyancy of the float (15).

11. A submersible cage as claimed in any preceding claim, further comprising a weight (14) attached to a lower part of the cage (10).

12. A method of adjusting the depth of a submersible cage (10) for offshore aquaculture, the cage (10) comprising a variable buoyancy float (15) mounted on the cage (10) and with a flexible element (17) connected at one end to the cage (10) and at the other end to a floating mount structure (20) separate from the cage (10), and wherein said flexible element (17) is arranged such that at certain depths of submersion, the flexible element (17) hangs in an arc between the cage (10) and the mount structure (20), the method comprising:
changing the buoyancy of said variable buoyancy float (15) such that the weight distribution of the flexible element (17) between the cage (10) and another support (20) is changed; **characterized in that**
the flexible element (17) comprises at least one rope, cable, chain or similar made from a material such as metal which is more dense and/or heavy compared to the ambient water, so as to provide a downward force on the variable buoyancy float (15) and on the mount structure, to help to stabilize the submersible cage when submerged in the water.

## Patentansprüche

1. Tauchfähiger Käfig für küstennahe Aquakultur, Folgendes umfassend:
einen Käfig (10) zum Enthalten von Wassertieren;
einen Schwimmer (15) mit variablem Auftrieb;
ein flexibles Element (17), das an einem Ende mit dem Käfig (10) verbunden ist und mit dem anderen Ende so angeordnet ist, dass die Gewichtsverteilung des flexiblen Elements zwischen dem Käfig (10) und einer anderen Stütze durch Variieren des Auftriebs des Schwimmers (15) mit variablem Auftrieb angepasst werden kann; und
eine schwimmende Montagestruktur (20), getrennt von dem Käfig (10);
wobei das flexible Element (17) zwischen dem Käfig (10) und der Montagestruktur (20) verbunden ist; und wobei das flexible Element (17) so angeordnet ist, dass das flexible Element (17) bei gewissen Eintauchtiefen in einem Bogen zwischen dem Käfig (10) und der Montagestruktur (20) hängt; **dadurch gekennzeichnet, dass**
das flexible Element (17) mindestens ein Seil, Kabel, eine Kette oder ähnliches aus einem Material wie Metall gefertigt umfasst, welches dichter und/oder schwerer im Vergleich zum umgebenden Wasser ist, um eine Abwärtskraft an dem Schwimmer (15) mit variablem Auftrieb und an der Montagestruktur bereitzustellen, um dabei zu helfen, den tauchfähigen Käfig, wenn er im Wasser eingetaucht ist, zu stabilisieren.

2. Tauchfähiger Käfig nach Anspruch 1, wobei das (die) mindestens eine Seil, Kabel, Kette oder ähnliches des flexiblen Elements (17) aus Metall gefertigt ist.

3. Tauchfähiger Käfig nach Anspruch 1 oder 2, wobei der Schwimmer (15) mit variablem Auftrieb an einem unteren Teil des Käfigs (10) befestigt ist.

4. Tauchfähiger Käfig nach Anspruch 1, 2 oder 3, weiter eine Flüssigkeitszuführungsleitung (33) umfassend, die angeordnet ist, um eine Flüssigkeit mit einer anderen Dichte als das umgebende Wasser zuzuführen, um den Auftrieb des Schwimmers (15) mit variablem Auftrieb zu variieren.

5. Tauchfähiger Käfig nach einem vorstehenden Anspruch, wobei der Schwimmer (15) mit variablem Auftrieb einen Flüssigkeitsauslass umfasst.

6. Tauchfähiger Käfig nach einem vorstehenden Anspruch, weiter einen Schwimmer (16) mit festem Auftrieb umfassend.

7. Tauchfähiger Käfig nach einem vorstehenden Anspruch, eine Vielzahl von Schwimmern (15) mit variablem Auftrieb umfassend.

8. Tauchfähiger Käfig nach einem vorstehenden Anspruch, weiter eine Luftrückhaltestruktur (21) umfassend, wobei die Luftrückhaltestruktur (21) eine Struktur aufweist, die am Boden offen ist, sodass Luft innerhalb der Luftrückhaltestruktur (21), zurückgehalten werden kann, während sie unter Wasser ist, um unter Wasser eine Luft-/Wasserschnittstelle zu bilden.

9. Tauchfähiger Käfig nach Anspruch 8, wobei eine Luftzuführungsleitung (33) angeordnet ist, um Luft zur Luftrückhaltestruktur (21) ebenso wie zum Schwimmer (15) mit variablem Auftrieb zuzuführen.

10. Tauchfähiger Käfig nach Anspruch 8, wobei die Luftrückhaltestruktur (21) auch den Schwimmer (15) mit variablem Auftrieb bereitstellt.

11. Tauchfähiger Käfig nach einem vorstehenden Anspruch, weiter ein Gewicht (14) umfassend, das an einem unteren Teil des Käfigs (10) befestigt ist.

12. Verfahren zum Anpassen der Tiefe eines tauchfähigen Käfigs (10) für küstennahe Aquakultur, wobei der Käfig (10) einen Schwimmer (15) mit variablem Auftrieb umfasst, der an dem Käfig (10) montiert ist, und mit einem flexiblen Element (17), das an einem Ende mit dem Käfig (10) verbunden ist und an dem anderen Ende mit einer schwimmenden Montagestruktur (20), die von dem Käfig (10) getrennt ist, und wobei das flexible Element (17) so angeordnet ist, dass das flexible Element (17) bei gewissen Eintauchtiefen in einem Bogen zwischen dem Käfig (10) und der Montagestruktur (20) hängt, wobei das Verfahren umfasst:
Ändern des Auftriebs des Schwimmers (15) mit variablem Auftrieb, sodass die Gewichtsverteilung des flexiblen Elements (17) zwischen dem Käfig (10) und einer anderen Stütze (20) geändert wird; **dadurch gekennzeichnet, dass**
das flexible Element (17) mindestens ein Seil, Kabel, eine Kette oder ähnliches aus einem Material wie Metall gefertigt umfasst, welches dichter und/oder schwerer im Vergleich zum umgebenden Wasser ist, um eine Abwärtskraft an dem Schwimmer (15) mit variablem Auftrieb und an der Montagestruktur bereitzustellen, um dabei zu helfen, den tauchfähigen Käfig, wenn er im Wasser eingetaucht ist, zu stabilisieren.

## Revendications

1. Cage submersible pour aquaculture en mer, comprenant :
une cage (10) pour contenir des animaux aquatiques ;
un flotteur à flottabilité variable (15) ;
un élément souple (17) relié au niveau d'une extrémité à la cage (10) et avec l'autre extrémité agencée de telle sorte que la distribution de poids de l'élément souple entre la cage (10) et un autre support peut être ajustée en faisant varier la flottabilité du flotteur à flottabilité variable (15) ; et
une structure de montant flottante (20) séparée de la cage (10) ;
dans laquelle l'élément souple (17) est relié entre la cage (10) et la structure de montant (20) ; et dans laquelle ledit élément souple (17) est agencé de telle sorte qu'à certaines profondeurs d'immersion, l'élément souple (17) est suspendu dans un arc entre la cage (10) et la structure de montant (20) ; **caractérisée en ce que**
l'élément souple (17) comprend au moins une corde, un câble, une chaîne ou similaire en matériau tel qu'un métal qui est plus dense et/ou lourd par rapport à l'eau environnante, de façon à fournir une force descendante sur le flotteur à flottabilité variable (15) et sur la structure de montant, pour aider à stabiliser la cage submersible lorsqu'elle est immergée dans l'eau.

2. Cage submersible selon la revendication 1, dans laquelle lesdits au moins une corde, un câble, une chaîne ou similaire de l'élément souple (17) sont fabriqués à partir de métal.

3. Cage submersible selon la revendication 1, ou 2, dans laquelle ledit flotteur à flottabilité variable (15) est fixé à une partie inférieure de ladite cage (10).

4. Cage submersible selon la revendication 1, 2 ou 3, comprenant en outre une conduite d'alimentation en fluide (33) agencée pour alimenter en fluide de densité différente par rapport à l'eau environnante de façon à faire varier la flottabilité du flotteur à flottabilité variable (15).

5. Cage submersible selon une quelconque revendication précédente, dans laquelle ledit flotteur à flottabilité variable (15) comprend une sortie de fluide.

6. Cage submersible selon une quelconque revendication précédente, comprenant en outre un flotteur à flottabilité fixe (16).

7. Cage submersible selon une quelconque revendication précédente, comprenant une pluralité de flotteurs à flottabilité variable (15).

8. Cage submersible selon une quelconque revendication précédente, comprenant en outre une structure de rétention d'air (21), la structure de rétention d'air (21) présentant une structure qui est ouverte au niveau du fond de sorte que de l'air peut être retenu au sein de la structure de rétention d'air (21) pendant un séjour sous l'eau pour créer une interface air/eau subaquatique.

9. Cage submersible selon la revendication 8, dans laquelle la conduite d'alimentation en air (33) est agencée pour alimenter en air la structure de rétention d'air (21) ainsi que le flotteur à flottabilité variable (15).

10. Cage submersible selon la revendication 8, dans lequel la structure de rétention d'air (21) fournit également la flottabilité variable du flotteur (15).

11. Cage submersible selon une quelconque revendication précédente, comprenant en outre un poids (14) fixé à une partie inférieure de la cage (10).

12. Procédé d'ajustement de la profondeur d'une cage submersible (10) pour une aquaculture en mer, la cage (10) comprenant un flotteur à flottabilité variable (15) monté sur la cage (10) et avec un élément souple (17) relié au niveau d'une extrémité à la cage (10) et au niveau de l'autre extrémité à une structure de montant flottante (20) séparée de la cage (10), et dans lequel ledit élément souple (17) est agencé de telle sorte qu'à certaines profondeurs d'immersion, l'élément souple (17) est suspendu dans un arc entre la cage (10) et la structure de montant (20), le procédé comprenant :
le changement de la flottabilité dudit flotteur à flottabilité variable (15) de telle sorte que la distribution de poids de l'élément souple (17) entre la cage (10) et un autre support (20) est changée ; **caractérisé en ce que**
l'élément souple (17) comprend au moins une corde, un câble, une chaîne ou similaire fabriqués à partir d'un matériau tel qu'un métal qui est plus dense et/ou lourd par rapport à l'eau environnante, de façon à fournir une force descendante sur le flotteur à flottabilité variable (15) et sur la structure de montant, pour aider à stabiliser la cage submersible lorsqu'elle est immergée dans l'eau.
